# DEMANDE DE BREVET EUROPEEN

(11) **EP 1 526 538 A1**
(43) Date de publication de la demande: **27.04.2005**
(21) Numéro de dépôt: 04103625.2
(22) Date de dépôt: 28.07.2004
(51) Int. Cl.: G11B 27/031, G11B 27/10, G11B 27/00

(54) **Procédé et dispositif d'acquisition et de traitement de données d'apprentissage de la conduite d'un véhicule**

(30) Priorité: 05.08.2003 FR 0350401
(71) Demandeur: Corsica Disinfezzione S.A.R.L., 20090 Ajaccio (FR)
(72) Inventeur: ANTONINI, Jacques, 20090, AJACCIO (FR)
(74) Mandataire: Decobert, Jean-Pascal

(57) **Abrégé**

La présente invention concerne un procédé d'acquisition et de traitement de données d'apprentissage de la conduite d'un véhicule comportant :
- une étape d'acquisition de données d'apprentissage comprenant des données audio et vidéo
- une étape de stockage des données d'apprentissage
L'étape de stockage des données d'apprentissage comprend :
- un premier stockage en continu des données acquises dans une première unité de stockage
- une sélection d'une partie des données acquises et stockées ;
- un second stockage de la partie sélectionnée des données dans une seconde unité de stockage.

## Description

La présente invention concerne un procédé d'acquisition et de traitement de données d'apprentissage de la conduite d'un véhicule. Elle concerne également un dispositif apte à mettre en oeuvre ce procédé.

L'invention trouvera son application particulière dans le domaine de l'apprentissage de véhicule automobile du type auto-école en complément des leçons de conduite avec un moniteur.

On connaît du document WO-A-9734277 un dispositif d'aide à l'apprentissage du pilotage d'un avion comprenant des moyens d'enregistrement de données vidéo et audio pour un traitement ultérieur. En particulier, il est possible de marquer un événement sur l'enregistrement afin de le repérer et de rejouer le passage considéré.

Ce type de dispositif présente différents inconvénients et a en particulier recours à des moyens de stockage de capacité élevée. Il faut en effet stocker l'intégralité des données d'enregistrement audio et vidéo. Compte-tenu de l'ampleur des données stockées, le temps de retour sur une portion de données marquées s'avère relativement long.

Ce dispositif est dans son ensemble complexe et peu adaptable à des domaines techniques tel que celui de l'auto -école nécessitant une structure légère et moins coûteuse.

La présente invention permet de remédier en tout ou partie à ces inconvénients et présente pour ce faire un nouveau procédé et un nouveau dispositif d'acquisition et de traitement de données d'apprentissage de la conduite d'un véhicule.

L'invention a l'avantage de ne nécessiter un stockage définitif que seulement de certaines parties des données audio et vidéo acquises. On peut ainsi sélectionner les données à stocker définitivement ce qui limite les capacités de stockage requises et simplifie le traitement ultérieur. On peut ainsi concevoir un dispositif de structure légère et peu coûteuse.

Le procédé ici proposé permet à l'élève de prendre conscience concrètement des erreurs qu'il a commises et de les constater visuellement après coup.

L'invention servira notamment à développer et valoriser le métier de l'auto-école en le modernisant et en créant des emplois.

D'autres buts et avantages apparaîtront au cours de la description qui suit d'un mode préféré de réalisation de l'invention qui n'est pas limitatif.

La présente invention concerne un procédé d'acquisition et de traitement de données d'apprentissage de la conduite d'un véhicule comportant :
- une étape d'acquisition de données d'apprentissage comprenant des données audio et vidéo
- une étape de stockage des données d'apprentissage

L'étape de stockage des données d'apprentissage comprend :
- un premier stockage en continu des données acquises dans une première unité de stockage
- une sélection d'une partie des données acquises et stockées ;
- un second stockage de la partie sélectionnée des données dans une seconde unité de stockage.

Ce procédé est tel que :
- La sélection d'une partie des données acquises comporte les phases consistant à :
   - entrer un signal de commande par l'utilisateur,
   - extraire de la première unité de stockage les données acquises durant un laps de temps prédéterminé avant l'entrée du signal de commande
   - stocker les données extraites dans la seconde unité de stockage.
- On extrait également de la première unité de stockage les données acquises durant un laps de temps prédéterminé après l'entrée du signal de commande,
- On utilise une seconde unité de stockage sous forme d'une mémoire amovible,
- On récupère les données stockées sur la seconde unité de stockage sur un ordinateur personnel, pour un traitement ultérieur.

L'invention concerne également un dispositif d'acquisition et de traitement de données d'apprentissage de la conduite d'un véhicule comportant :
- des moyens d'acquisition de données d'apprentissage incluant des moyens d'acquisition audio et vidéo
- des moyens de stockage des données acquises, Les moyens de stockage comportent :

- une première unité de stockage en continu des données acquises,
- une seconde unité de stockage d'une partie sélectionnée des données acquises et stockées dans la première unité de stockage,
et par le fait qu'il comporte des moyens de sélection d'une partie des données acquises et stockées dans la première unité de stockage.

De façon avantageuse, ce dispositif est tel que :
- Les moyens de sélection comportent un organe de commande pour l'entrée d'un signal de commande et des moyens de traitement configurés pour extraire de la première unité de stockage les données acquises durant un laps de temps prédéterminé avant l'entrée du signal de commande,
- Les moyens de traitement sont configurés pour extraire également de la première unité de stockage les données acquises durant un laps de temps prédéterminé après l'entrée du signal de commande,
- La seconde unité de stockage est une mémoire amovible,
- Il comporte un ordinateur personnel pour la récupération des données stockées dans la seconde unité de stockage pour traitement ultérieur.

Les dessins ci-joints sont donnés à titre d'exemples et ne sont pas limitatifs de l'invention. Ils représentent seulement un mode de réalisation de l'invention et permettront de la comprendre aisément.

La figure 1 montre un mode de réalisation d'un dispositif de l'invention embarqué dans un véhicule automobile.

La figure 2 schématise les éléments constitutifs du dispositif de l'invention dans le mode de réalisation de la figure 1.

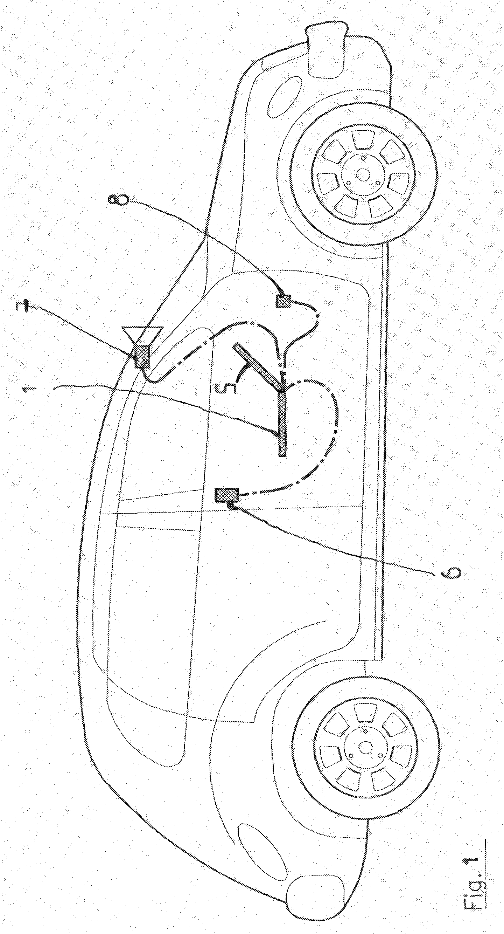

En référence à la figure 1, le dispositif ici proposé peut être embarqué dans un véhicule de type quelconque et par exemple un véhicule automobile utilisable dans le cadre d'une activité d'auto-école.

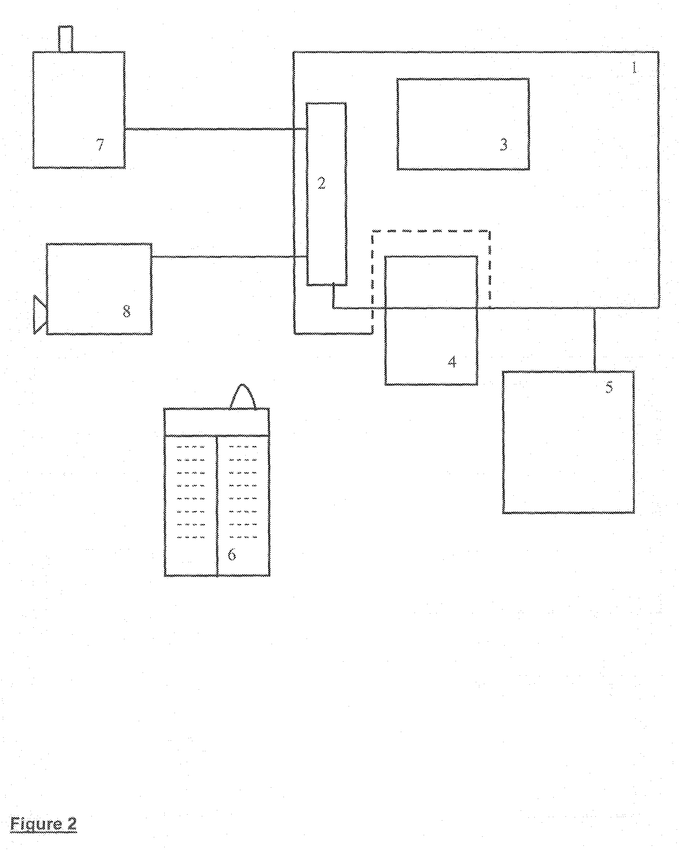

Ce dispositif comporte des moyens d'acquisition de données d'apprentissage et en particulier de données vidéo et audio. Ces moyens d'acquisition sont repérés (7, 8) en figure 1 et 2. On pourra utiliser une caméra ou encore une Web caméra équipée d'un objectif grand angle placée à l'intérieur du véhicule pour constituer les moyens d'acquisition vidéo (7). La caméra peut être positionnée sur le pare brise juste derrière le rétroviseur intérieur, ou encore sur le tableau de bord de façon à permettre une vision du capot de l'automobile (ou d'un autre véhicule) ainsi que de la centaine de mètres devant le véhicule. On notera qu'on peut aussi installer le dispositif sur un motocycle en positionnant la caméra sur le guidon ou sur les phares. Les moyens d'acquisition audio (8) peuvent être constitués par un micro d'ambiance de conception courante, le reste du dispositif peut être implanté dans un véhicule suiveur relié par liaison radio HF aux moyens localisés sur le motocycle.

Dans les autres cas, ces moyens d'acquisition (7, 8) sont reliés pour tous moyens courants et en particulier par une liaison filaire à une unité centrale (1) réalisable sous forme d'un ordinateur personnel du type portable comportant de préférence une capacité de mémoire morte de l'ordre de 20 Giga Octets.

L'unité centrale (1) comporte également un autre périphérique sous forme d'un organe de commande (6) apte à être actionné, en particulier par pression manuelle, par l'utilisateur. A titre d'exemple, l'organe de commande (6) est une poire reliée par un cordon à l'ordinateur. L'organe de commande (6) permet l'entrée d'un événement au niveau de l'unité centrale afin de déclencher une action de sélection des données audio et vidéo comme il sera décrit plus en détail ci-après.

L'unité centrale (1) est par ailleurs raccordée à un écran (5) permettant la visualisation des données vidéo et l'interfaçage graphique pour la gestion du dispositif.

Comme représenté en figure 2, le dispositif comporte en outre une unité de stockage (4) de préférence amovible et pouvant être conforme à la norme PCMCIA bien que cette solution ne soit pas limitative.

On décrit ci-après plus précisément le déroulement de la mise en oeuvre de l'invention.

Lors d'une situation de conduite, les moyens d'acquisition vidéo (7) et audio (8) sont activés de façon à mémoriser les données correspondantes dans l'unité de stockage résidente (3) de l'unité centrale (1).

Durant cette opération, le moniteur chargé de l'apprentissage de la conduite surveille les actions de son élève. S'il détecte une situation de conduite sur laquelle il veut plus particulièrement attirer l'attention de l'élève (notamment en cas d'une erreur du conducteur), le moniteur génère un signal de commande par le biais de l'organe de commande (6). Ce signal déclenche une sélection d'une partie des données acquises et stockées en vue d'un stockage de cette partie sélectionnée dans la seconde unité de stockage, l'unité de stockage amovible (4).

A titre préféré, le signal de commande généré par le moniteur déclenche la mémorisation dans l'unité de stockage amovible (4) des données acquises dix secondes avant le signal de commande, et dix secondes après ledit signal de commande.

On garde ainsi en mémoire définitive, au niveau de l'unité (4), les données sélectionnées sur lesquelles l'élève doit accentuer son travail. Par contre, le reste des données, stockées dans l'unité de stockage (3) peut être effacée à l'issue de la leçon de conduite ou de façon continue par rafraîchissement.

Dans un mode particulier de réalisation, le données stockées dans l'unité de stockage (4) sont récupérées au niveau d'un ordinateur personnel, par exemple au bureau du moniteur d'auto-école, pour réaliser un traitement ultérieur. En particulier, il est possible de retranscrire les données sur un support facilement exploitable par l'élève tel un CD Rom ou un autre support audio-visuel. On peut également réaliser des montages incluant les données récupérées lors de la conduite et d'autres données correspondant par exemple à des situations types.

Bien entendu, le mode de réalisation ainsi présenté n'est pas limitatif de l'invention. En particulier, les constituants du dispositif peuvent utiliser des moyens de transmission de différents types incluant des transmissions sans fil.

### REFERENCES

1. Unité centrale
2. Moyens de traitement
3. Unité de stockage résidente
4. Unité de stockage amovible
5. Ecran
6. Organe de commande
7. Moyen d'acquisition vidéo
8. Moyen d'acquisition audio

## Revendications

1. Procédé d'acquisition et de traitement de données d'apprentissage de la conduite d'un véhicule comportant :
- une étape d'acquisition de données d'apprentissage comprenant des données audio et vidéo
- une étape de stockage des données d'apprentissage
**Caractérisé par le fait que**,
L'étape de stockage des données d'apprentissage comprend :
- un premier stockage en continu des données acquises dans une première unité de stockage
- une sélection d'une partie des données acquises et stockées ;
- un second stockage de la partie sélectionnée des données dans une seconde unité de stockage.

2. Procédé selon la revendication 1,
**Caractérisé par le fait que**,
La sélection d'une partie des données acquises comporte les phases consistant à :
- entrer un signal de commande par l'utilisateur,
- extraire de la première unité de stockage les données acquises durant un laps de temps prédéterminé avant l'entrée du signal de commande
- stocker les données extraites dans la seconde unité de stockage.

3. Procédé selon la revendication 2,
**Caractérisé par le fait que**,
On extrait également de la première unité de stockage les données acquises durant un laps de temps prédéterminé après l'entrée du signal de commande.

4. Procédé selon l'une quelconque des revendications 1 à 3,
**Caractérisé par le fait que**,
On utilise une seconde unité de stockage sous forme d'une mémoire amovible.

5. Procédé selon la revendication 4,
**Caractérisé par le fait que**,
On récupère les données stockées sur la seconde unité de stockage sur un ordinateur personnel, pour un traitement ultérieur.

6. Dispositif d'acquisition et de traitement de données d'apprentissage de la conduite d'un véhicule comportant :
- des moyens d'acquisition de données d'apprentissage incluant des moyens d'acquisition audio et vidéo
- des moyens de stockage des données acquises,
**Caractérisé par le fait que**,
Les moyens de stockage comportent :
- une première unité de stockage en continu des données acquises,
- une seconde unité de stockage d'une partie sélectionnée des données acquises et stockées dans la première unité de stockage,
et **par le fait qu'**il comporte des moyens de sélection d'une partie des données acquises et stockées dans la première unité de stockage.

7. Dispositif selon la revendication 6,
**Caractérisé par le fait que**,
Les moyens de sélection comportent un organe de commande (6) pour l'entrée d'un signal de commande et des moyens de traitement configurés pour extraire de la première unité de stockage les données acquises durant un laps de temps prédéterminé avant l'entrée du signal de commande.

8. Dispositif selon la revendication 7,
**Caractérisé par le fait que**,
Les moyens de traitement sont configurés pour extraire également de la première unité de stockage les données acquises durant un laps de temps prédéterminé après l'entrée du signal de commande.

9. Dispositif selon l'une quelconque des revendications 6 à 8,
**Caractérisé par le fait que**,
La seconde unité de stockage est une mémoire amovible.

10. Dispositif selon la revendication 9,
**Caractérisé par le fait que**,
Il comporte un ordinateur personnel pour la récupération des données stockées dans la seconde unité de stockage pour traitement ultérieur.
